# EUROPÄISCHE PATENTSCHRIFT

(11) **EP 0 580 034 B1**
(45) Veröffentlichungstag und Bekanntmachung des Hinweises auf die Patenterteilung: **25.10.1995**
(21) Anmeldenummer: 93110983.9
(22) Anmeldetag: 09.07.1993
(51) Int. Cl.: G05G 5/04, A01B 63/111, E02F 9/20

(54) **Bedienungsbaueinheit**
Hitch control interface assembly
Unité de commande

(30) Priorität: 20.07.1992 US 915217
(43) Veröffentlichungstag der Anmeldung: 26.01.1994
(73) Patentinhaber: DEERE & COMPANY, Moline, Illinois 61265 (US)
(72) Erfinder: Haight, Robert Eugene, Waterloo, Iowa 50702 (US)
(74) Vertreter: Feldmann, Bernhard

(56) Entgegenhaltungen:
- EP-A- 0 112 642
- DE-A- 2 306 735
- DE-U- 8 811 424
- FR-A- 1 478 161
- GB-A- 738 603
- GB-A- 1 101 775
- US-A- 4 501 168
- US-A- 4 548 094

## Beschreibung

Die Erfindung betrifft eine Bedienungsbaueinheit, insbesondere für eine Anbaugerätelagesteuerung eines landwirtschaftlichen oder gewerblichen Fahrzeugs.

Hydromechanische Steuersysteme für Anhänge- oder Anbauvorrichtungen von Fahrzeugen, wie beispielsweise landwirtschaftlichen oder gewerblichen Fahrzeugen, enthalten typischerweise Hubwellensteuerhebel, die lange Betätigungswege und hohe Kräfte erfordern. In der US-A-4,518,044 ist ein derartiges Steuersystem beschrieben, das verschiedene durch eine Bedienungsperson betätigbare Steuerelemente, wie Hebel, drehbare Knöpfe und Schalter enthält. Andere elektronische Anhängesteuersysteme, bei denen mit entsprechenden Wandlern verbundene Schalter, Hebel und Knöpfe verwendet werden, sind in der US-A-4,931,967, der US-A-4,969,527 und der US-A-4,979,092 beschrieben. Keine dieser Veröffentlichungen offenbart jedoch eine Bedienungsbaueinheit, in der die verschiedenen Schalter, Hebel und Knöpfe für die Anbauvorrichtungssteuerung zusammengefaßt sind.

Die GB-A-2093676 zeigt ein Anhängesteuersystem für einen Schlepper mit Knöpfen und einem Schalter, die sich auf einem flachen Bedienungspult befinden. Die Bewegung eines solchen Drehknopfes steht mit der Auf- und Ab-Bewegung einer Hubwelle in keiner erkennbaren Beziehung. Daher können bei der Bedienung derartiger Drehknöpfe leicht Fehler auftreten.

Die der Erfindung zugrunde liegende Aufgabe wird darin gesehen, eine Bedienungsbaueinheit, insbesondere für ein elektronisches Anhängesteuersystem anzugeben, welches einen Hubwellensteuerhebel enthält, dessen Bewegung logisch mit der Hubwellenbewegung in Beziehung steht. Es sollen ferner mehrere Funktionen, insbesondere Anhängesteuerfunktionen, zu einer kompakten Baueinheit zusammengefaßt werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Bedienungsbaueinheit besteht im wesentlichen aus einem Gehäuse mit zwei Seitenwandungen, die zu einer konvex gekrümmten oberen Fläche zusammengesetzt sind. In der oberen Gehäusefläche befindet sich ein in Fahrtrichtung des Fahrzeuges ausgerichteter Schlitz. Zwischen den Seitenwandungen erstreckt sich eine Hauptwelle, die von den Seitenwandungen getragen wird. Die Hauptwelle trägt ein Steuerelement, dessen äußere Umrandung in Richtung des Schlitzes ausgerichtet ist. Ein in gleicher Weise ausgerichtetes Anschlagelement ist reibend mit dem Steuerelement gekoppelt. Von der äußeren Umrandung des Anschlagelements steht ein Anschlag vor. An dem Steuerelement ist ein Hebel schwenkbar angelenkt, der lösbar mit dem Anschlag in Engriff gebracht werden kann. An das Steuerelement ist ein Signalwandler gekoppelt, der ein der Lage des Steuerelements entsprechendes Signal erzeugt. Ein Daumenrad, das mit einem Zahnrad verbunden ist, läßt sich betätigen, um eine Drehung des Anschlagelements relativ zum Gehäuse herbeizuführen. Ein Vorsprung erstreckt sich in den Schlitz. Der Vorsprung wirkt mit dem Hebel derart zusammen, daß sich dessen Relativbewegung zum Gehäuse und damit auch die Relativbewegung des Steuerelements zum Gehäuse wahlweise begrenzen läßt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Darstellung einer erfindungsgemäßen Bedienungsbaueinheit für eine Anbaugerätelageregelung,

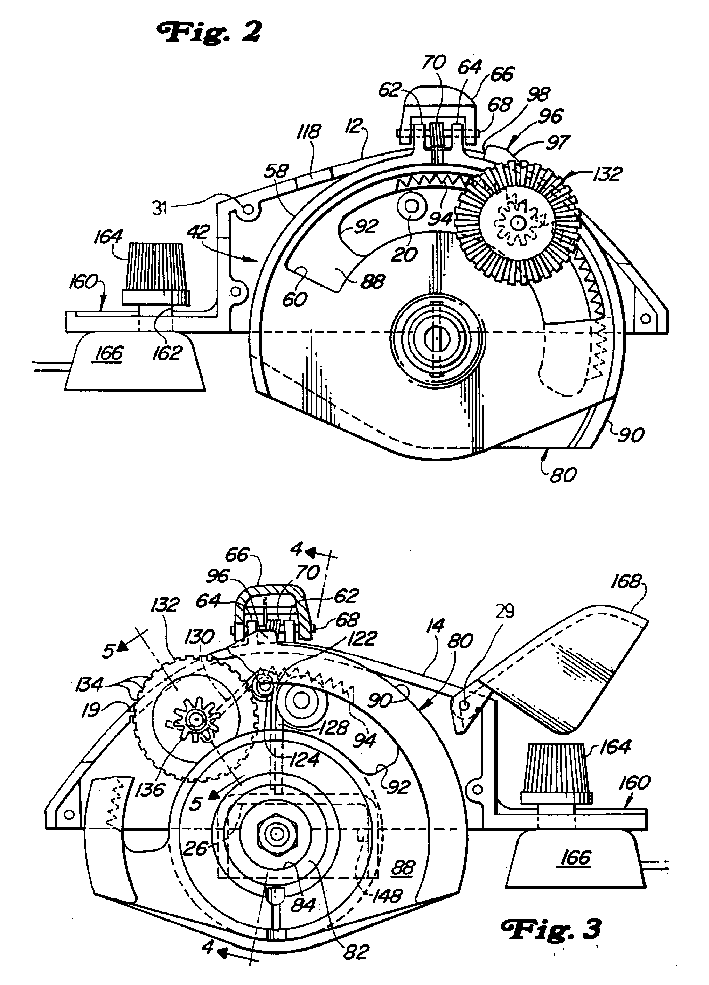

- Fig. 2: die Seitenansicht der linken Hälfte der erfindungsgemäßen Bedienungsbaueinheit, bei der die rechte Gehäuseseite entfernt wurde,
- Fig. 3: die Seitenansicht der rechten Hälfte der erfindungsgemäßen Bedienungsbaueinheit, bei der die linke Gehäuseseite entfernt wurde,
- Fig. 4: den Querschnitt entlang der Linie 4 - 4 in Fig. 3,
- Fig. 5: den Querschnitt entlang der Linie 5 - 5 in Fig. 3 und
- Fig. 6: eine isometrische Explosionsdarstellung, durch die die Anordnung der sich drehenden Teile der vorliegenden Erfindung hervorgehoben wird.

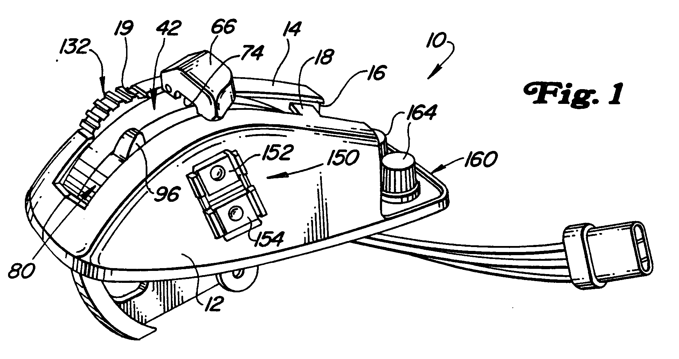

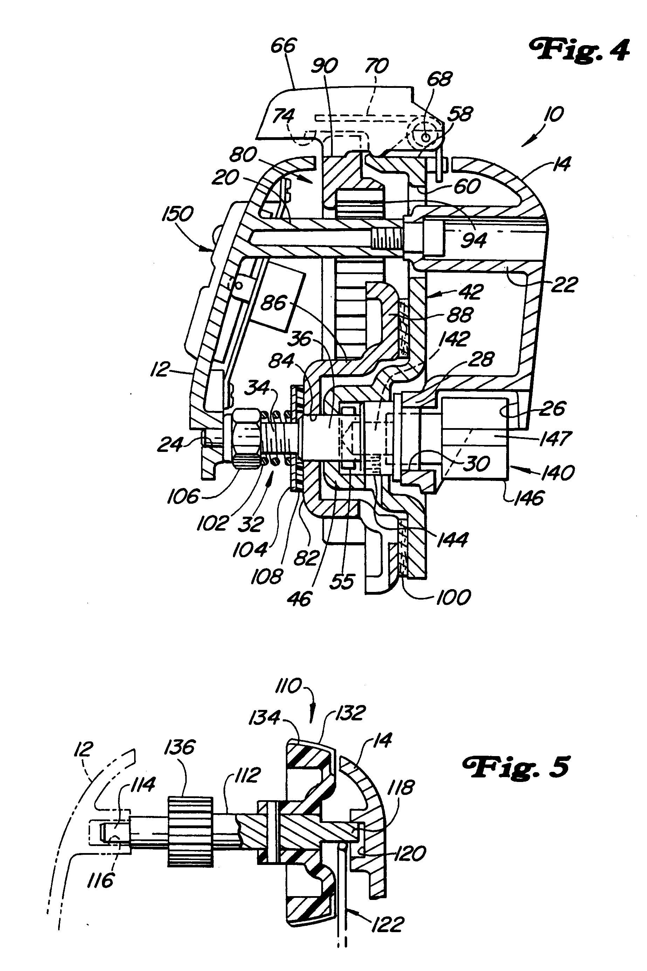

Aus den Fig. 1 und 4 geht eine Interface- bzw. Bedienungsbaueinheit 10 für die nicht gezeigte Steuerung einer Fahrzeuganhänge- oder Anbauvorrichtung hervor, die ein linkes oder zum Fahrzeuginneren weisendes Gehäuseteil 12 und ein rechtes oder nach außen weisendes Gehäuseteil 14 enthält. Der in Fig. 1 links dargestellte Bereich weist zur Fahrzeugvorderseite, während der rechts dargestellte Bereich zum Fahrzeugheck ausgerichtet ist. Die Gehäuseteile 12 und 14 sind mit weichen Abrundungen ausgebildet und miteinander derart zusammengesetzt, daß ein Schlitz 16 zwischen ihnen ausgebildet ist. Das linke Gehäuseteil 12 enthält einen Vorsprung 18, welcher in den Schlitz 16 in der Nähe dessen hinteren Endes hineinragt. In dem rechten Gehäuseteil 14 ist eine Durchgangsöffnung 19 ausgebildet, welche zum Schlitz 16 hin offen ist. An den Gehäuseteilen 12, 14 sind ferner hohle Streben 20, 22 angeformt, die aufeinander zu ausgerichtet sind. Die Gehäuseteile 12, 14 sind durch eine Schraube, die von einer der hohlen Streben 22 aufgenommen und in die andere hohle Strebe 20 eingeschraubt ist, fest miteinander verbunden.

Nicht näher bezeichnete miteinander korrespondierende Stifte und Gehäusebohrungen dienen der genauen Ausrichtung der Gehäuseteile 12, 14 zueinander. In einem tiefer liegenden mittleren Bereich des Gehäuseteils 12 befindet sich eine Bohrung 24. Ein tiefer liegender mittlerer Bereich des Gehäuseteils 14 enthält eine rechteckförmige Ausnehmung 26, eine Lagerbüchse 28 und eine Bohrung 30. Die Achse der Bohrungen 24 und 30 fluchten miteinander. Bereiche der äußeren Peripherie der Gehäuseteile 12 und 14 sind in bezug auf die Achsen der Bohrungen 24 und 30 im wesentlichen zylindrisch ausgebildet. In den hinteren Bereich des Schlitzes 16 erstrecken sich Trägerstifte 29, 31.

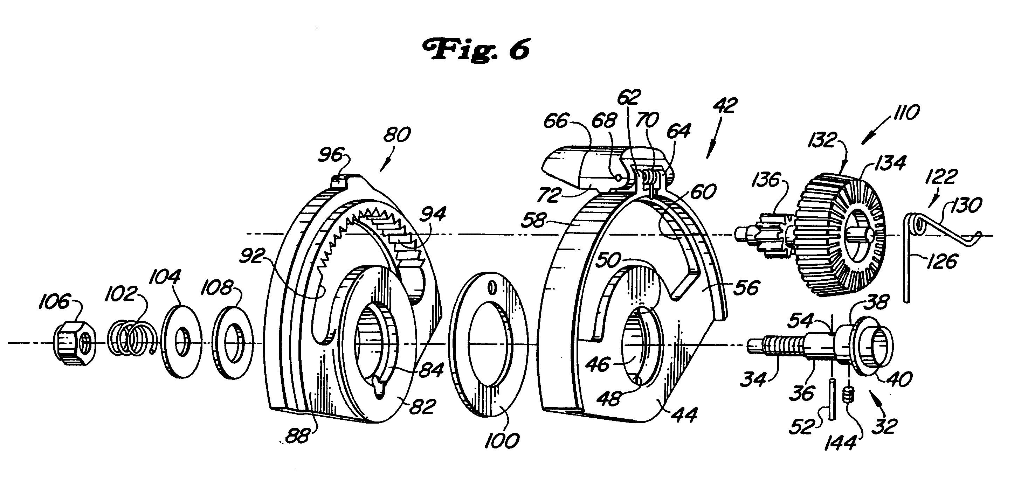

Wie am besten aus den Fig. 4 und 6 ersichtlich, nimmt die Bohrung 24 ein Ende einer Hauptwelle, auch Welle 32 genannt, auf. Die Welle 32 enthält einen Gewindeabschnitt 34, einen zylindrischen Wellenabschnitt 36, einen Wellenabschnitt 38 größeren Durchmessers und einen zylindrischen Flansch 40, der sich auf dem Wellenabschnitt 38 befindet. Der Wellenabschnitt 38 ist hohl ausgebildet, und sein Ende ist innen ausgekehlt.

Auf der Welle 32 ist als Steuerelement ein Hubwellensteuerrad 42 gelagert und läßt sich mit diesem verdrehen. Das Hubwellensteuerrad 42 enthält einen mittleren Bereich 44 mit einer sich axial erstreckenden hohlen Nabe 46. Im Inneren der Habe 46 befinden sich auf sich gegenüber liegenden Seiten je eine Aussparung 48 und 50. Ein Stift 52 erstreckt sich durch eine radiale Bohrung 54 der Welle 36 und wird mit seinen beiden hervorstehenden Enden von den Aussparungen 48, 50 derart aufgenommen, daß das Hubwellensteuerrad 42 drehfest mit der Welle 32 gekoppelt ist. Das Hubwellensteuerrad 42 enthält ferner einen Scheibenbereich 56, der einen segmentförmigen zylindrisch ausgebildeten Außenflansch 58 trägt, welcher sich über ungefähr 218° des Umfanges erstreckt. In dem Scheibenbereich 56 ist ein bogenförmiger Schlitz 60 eingelassen, der die hohle Strebe 20 derart aufnimmt, daß sich das Hubwellensteuerrad 42 relativ zu den Gehäuseteilen 12 und 14 verdrehen läßt.

Zwei Vorsprünge 62, 64 erstrecken sich vom Außenflansch 58 des Hubwellensteuerrades 42 aus nach außen. Ein Bedienungshebel bzw. eine Anschlagvorrichtung 66 ist durch einen Stift 68 verschwenkbar an den Vorsprüngen 62, 64 gelagert. Eine Feder 70 drängt den Bedienungshebel 66 in die in den Fig. 1 und 6 dargestellte Lage. Der Bedienungshebel 66 läßt sich hinsichtlich der Fig. 4 und 6 im Uhrzeigersinn manuell so verschwenken, daß sein freies (bezüglich der Fahrtrichtung linkes) Ende angehoben ist. Der Bedienungshebel 66 weist eine nach hinten weisende geschlossene Seitenwand 72 auf, die mit dem Vorsprung 18 zusammenwirkt, wenn der Bedienungshebel 66 seine untere Schwenklage einnimmt und den Bewegungsweg des Bedienungshebels 66 begrenzt. Die vordere Seitenwand des Bedienungshebels 66 enthält eine Ausnehmung 74.

Auf der Welle 36 ist ferner ein Begrenzungsbauteil oder Anschlageinstellrad 80 befestigt. Das Anschlageinstellrad 80 weist eine Nabe 82 mit einer zentralen Bohrung 84, die von der Welle 36 drehbar aufgenommen wird, einen zylindrischen Bereich 86, einen Scheibenbereich 88 und einen äußeren Flansch 90 (der sich ebenfalls über einen Umfangsbereich von ungefähr 218° erstreckt) auf. In dem Scheibenbereich 88 befindet sich ein gekrümmter Schlitz 92, der die hohle Strebe 20 derart aufnimmt, daß sich das Anschlageinstellrad 80 relativ zu den Gehäuseteilen 12 und 14 verdrehen läßt. Entlang der radial nach innen weisenden Fläche des Schlitzes 92 stehen Zähne 94 vor. Ein Endlager oder Anschlag 96 erstreckt sich radial über den Flansch 90 hinaus nach außen. Der Anschlag 96 weist eine radial ausgerichtete nach hinten weisende Anschlag- oder Endlagerfläche 98 sowie eine schräg ansteigende, rampenförmige Oberfläche 97 auf, die ausgehend von der äußeren Kante der Endlagerfläche 98 abfällt und weich in die zylindrische äußere Fläche des Flansches 90 einmündet.

Eine ringförmige Reibungsscheibe 100 wird zwischen den beiden im wesentlichen scheibenförmigen Rädern 42 und 80 gehalten. Die Räder 42 und 80 und die Reibungsscheibe 100 werden durch eine Schraubenfeder 102, die auf der Welle 32 zwischen einer Scheibe 104 und einer Federkrafteinstellmutter 106 liegt, gegeneinander gepreßt. Eine Kunststoffscheibe 108 geringer Reibung ist zwischen der Scheibe 104 und dem Anschlageinstellrad 80 eingefügt. Die Reibungskupplung zwischen den Rädern 80 und 42 ist derart ausgelegt, daß dann, wenn das Anschlageinstellrad 80 gedreht wird, sich das Hubwellensteuerrad 42 mitdreht.

Die Drehung des Anschlageinstellrades 80 wird durch ein Bedienungselement 110 vorgenommen. Das Bedienungselement 110 enthält eine Steuerwelle, auch Welle 112 genannt, deren eines Ende 114 drehbar von einer Bohrung 116, die im Inneren des Gehäuseteils 12 ausgebildet ist, aufgenommen wird. Das andere, zweite Ende 118 der Welle 112 wird von einem Schlitz 120 aufgenommen, der im Inneren des Gehäuseteils 14 ausgebildet ist und sich in radialer Richtung bezüglich der Drehachse der Räder 42 und 80 erstreckt. Der schraubenförmige Teil einer Feder 122 wird von einer stiftartigen Stütze 124, die im Inneren des Gehäuseteils 14 angeformt ist, aufgenommen. Die Feder 122 enthält ferner einen ersten Schenkel 126, der sich an einer im Inneren des Gehäuseteils 14 angeformten Wandung 128 abstützt, und einen zweiten Schenkel 130, der sich an dem zweiten Ende 118 der Welle 112 abstützt und dieses nach außen drückt. Ein Daumenrad 132 ist auf der Welle 112 befestigt und weist auf seinem äußeren Umfang sich axial erstreckende Nuten 134 auf. Auf der Welle 112 ist ein außenverzahntes Zahnrad befestigt, das in kämmendem Eingriff mit den Zähnen 94 des Anschlageinstellrades 80 steht. Die Feder 122 ist derart vorgespannt, daß sie die Welle 112 zum radial äußeren Ende des Schlitzes 120 und damit das Anschlagdaumenrad 132 in Eingriff mit den Kanten des Schlitzes 19 drängt, so daß gewöhnlich das Gehäuseteil 14 in die Nuten 134 des Daumenrades 132 eingreift und eine Drehung des Bedienungselements 110 verhindert. Infolgedessen muß für eine Verdrehung des Zahnrades 136 und des Anschlageinstellrades 80 das Daumenrad 132 gegen die Vorspannung der Feder 122 gedrückt werden, so daß die Nuten 134 des Daumenrades 132 sich aus dem Eingriff mit den Kanten der Durchgangsöffnungen 19 des Gehäuseteils 14 lösen.

Die Räder 42 und 80 sind derart dimensioniert, daß ihre Flansche 58 und 90 in dem Schlitz 16, der zwischen den beiden Gehäuseteilen 12 und 14 ausgebildet ist, liegen und daß die äußeren Flächen der Flansche 58 und 90 mit der äußeren Begrenzungsfläche der Gehäuseteile 12 und 14 zusammenfallen oder etwas unter diesen liegen.

Die Welle 142 eines Potentiometers 140, das als Signalwandler dient, wird von dem hohlen Wellenabschnitt 38 aufgenommen und ist auf der Hauptwelle 32 durch eine Festklemmschraube 144 festgesetzt. Bei dem Potentiometer 140 kann es sich um ein handelsübliches Potentiometer, beispielsweise ein Bourns # 96Z1ZZZZ-EAO/174, handeln. Es enthält vorzugsweise ein rechteckiges Gehäuse 146, das nicht drehbar in der rechteckigen Ausnehmung 26 des Gehäuseteils 14 befestigt ist. Die Welle 142 des Potentiometers 140 dreht sich immer dann, wenn sich das Hubwellensteuerrad 42 dreht. Das Potentiometer 140 liefert ein Signal, welches die Lage des Hubwellensteuerrades 42 repräsentiert, an eine nicht dargestellte Anhängevorrichtungssteuereinrichtung. Das rechteckige Gehäuse 146 enthält vorzugsweise eine Kerbe 147, in die ein entsprechender Vorsprung 148 des Gehäuseteils 14 eingreift, so daß das Potentiometer 140 genau ausgerichtet werden kann und gegen Verdrehungen in der Ausnehmung 26 gesichert ist.

Über einer rechteckigen Öffnung auf einer Seite des Gehäuseteils 12 ist ein Schalter 150 befestigt. Der Schalter 150 ist vorzugsweise ein handelsüblicher federzentrierter Momentkontaktwippschalter mit einem oberen Schalterteil 152 und einem unteren Schalterteil 154. Der Schalter 150 ist durch nicht dargestellte Leitungen mit einem nicht dargestellten Steuersystem vorzugsweise so verbunden, daß das Drücken des oberen Schalterteils 152 ein Anheben und ein Drücken des unteren Schalterteils 154 ein Absenken der nicht dargestellten Anhängevorrichtung zur Folge hat. Der Schalter 150 ist so angeordnet, daß er bequem durch den Daumen bedient werden kann, wenn die rechte Hand der Bedienungsperson auf der Bedienungsbaueinheit 10 ruht. Vorzugsweise ist der Schalter 150 als ein Heben/Senken-Schalter ausgelegt, wie er beispielsweise in der US-A-4,969,527 beschrieben wurde.

Die hinteren Enden der Gehäuseteile 12 und 14 bilden ein Bord oder eine Platte 160. Durch die Platte 160 erstrecken sich zwei Bohrungen 162, die der Aufnahme der Wellen je eines als Einstellknopf 164 ausgebildeten Einstellelements dienen, welche mit Einstellpotentiometern 166 verbunden sind. An den Tragstiften 29 und 31 ist eine Bord- oder Gehäuseabdeckung 168 verschwenkbar derart befestigt, daß sie die Einstellknöpfe 164 abdecken, wenn diese nicht betätigt werden sollen, und daß sie angehoben werden kann, wenn eine Betätigung der Knöpfe 164 gewünscht wird.

Die Bedienungsbaueinheit 10 ist vorzugsweise in der nicht dargestellten Kabine eines landwirtschaftlichen Schleppers in einer solchen Lage angebracht, die durch eine Bedienungsperson bequem zugänglich ist.

### Bedienungsweise

Der Bedienungshebel 66 dient zum Anheben und Absenken der Regelhydraulik eines Anhängevorrichtungssteuersystems und zur Einstellung der Betriebsstellung (Arbeitslage). Zum Anheben wird der Bedienungshebel 66 hinsichtlich der Fahrtrichtung zurückgezogen und zum Absenken nach vorn geschoben.

Der Bedienungshebel 66 läßt sich um die durch den Stift 68 gebildete Schwenkachse hoch schwenken, so daß sich mit dem Bedienungshebel 66 das Hubwellensteuerrad 42 im Uhrzeigersinn (bei einer Blickrichtung gemäß Fig. 1) so weit verdrehen läßt, bis die hintere Seitenwand 72 des Bedienungshebels 66 hinter dem vorstehenden Vorsprung 18 liegt. Wird nun der Bedienungshebel 66 losgelassen, so klappt er nach unten, so daß der Vorsprung 18 das Hubwellensteuerrad 42 in einer Transportverriegelungsstellung festhält. Befindet sich das Hubwellensteuerrad 42 in dieser Stellung, so wird das Signal des Potentiometers 140 durch das nicht dargestellte Anhängevorrichtungssteuersystem als Befehl für ein vollständiges Anheben der Anhängevorrichtung während einer Transportfahrt ausgewertet. Ein Absenken der Anhängevorrichtung wird in dieser Stellung verhindert, so daß beim Transport die Gefahr von Verletzungen und Sachschäden vermieden wird.

Durch eine Verschiebung des Bedienungshebels 66 nach vorn wird das Hubwellensteuerrad 42 gegen den Uhrzeigersinn verdreht. Hierbei wird das korrespondierende Signal des Potentiometers 140 durch das Anhängevorrichtungssteuersystem als Befehl für ein Absenken der Anhängevorrichtung während Feldarbeiten ausgewertet. Durch den über das Anschlageinstellrad 80 vorstehenden Anschlag 96 ist eine einstellbare Begrenzung für die Vorwärtsbewegung des Bedienungshebels 66 gegeben, da der Anschlag 96 in der Bewegungsbahn des herunter geschwenkten Bedienungshebels 66 liegt und beim Verdrehen des Hubwellensteuerrades 42 gegen den Uhrzeigersinn mit dem Bedienungshebel 66 in Eingriff tritt. Der Bedienungshebel 66 läßt sich nach oben verschwenken, so daß er den Anschlag 96 übergehen kann und sich über den Anschlag 96 hinaus bewegen läßt, wobei das Hubwellensteuerrad 42 gegen den Uhrzeigersinn verdreht wird.

Befindet sich der Bedienungshebel 66 hinsichtlich der Fahrtrichtung vor dem Anschlag 96, so läßt er sich ungehindert nach hinten bewegen. Wenn der Bedienungshebel 66 dabei den Anschlag 96 erreicht, tritt er mit der schräg ansteigenden Oberfläche 97 in Eingriff, so daß er automatisch angehoben und über den Anschlag 96 hinaus verschwenkt wird. Dies ermöglicht es einer Bedienungsperson, den Bedienungshebel 66 einfach nach hinten zu bewegen, ohne daß das Anschlageinstellrad 80 verstellt werden muß.

Die Lage des Anschlageinstellrades 80 und damit des Anschlags 96 läßt sich durch Niederdrücken und Verdrehen des Daumenrades 132 einstellen. Wird das Daumenrad 132 losgelassen, so wird es in seiner Lage verriegelt, da seine Kerben 134 in die Kanten der Durchgangsöffnung 19 eingreifen. Kleine Einstellungen des Hubwellensteuerrades 42 (Einstellung der Arbeitstiefe) lassen sich einfach dadurch erreichen, daß der Bedienungshebel 66 gegen den Anschlag 96 gelegt wird und dann das Daumenrad 132 heruntergedrückt und verdreht wird. Außer wenn der Bedienungshebel 66 durch den Vorsprung 18 in seiner Transportverriegelungsstellung gehalten wird, folgt er wegen der Reibungskupplung zwischen den Rädern 42 und 80 dem Anschlag 96 in beiden Richtungen.

Wünscht die Bedienungsperson, die Anhängevorrichtung anzuheben, währenddessen der Schlepper eine Kurve fährt und dann wieder in die ursprüngliche Arbeitsstellung abzusenken, so kann sie anstelle des Bedienungshebels 66 den Schalter 150 bedienen. Befindet sich der Bedienungshebel 66 in einer Betriebslage (und nicht in der Transportverriegelungsstellung), so wird das Herunterdrücken und Freigeben des oberen Schalterteils 152 des Schalters 150 von dem Anhängevorrichtungssteuersystem in einen Befehl zum Anheben der Anhängevorrichtung verarbeitet, während das Herunterdrücken und Freigeben des unteren Schalterteils 154 des Schalters 150 als Befehl zum Absenken und zur Rückkehr der Anhängevorrichtung in ihre ursprüngliche Lage ausgewertet wird. Der Heben/Senken-Schalter 150 ist deaktiviert, solange sich der Bedienungshebel 66 in der Transportverriegelungsstellung befindet.

Die Gehäuseabdeckung 168 über dem hinteren Bereich der Bedienungsbaueinheit 10 läßt sich nach oben vorn verschwenken, um die Einstellknöpfe 164 freizulegen. Einer der Einstellknöpfe dient der Einstellung eines Signals für die Absenkgeschwindigkeit, während der andere Einstellknopf der Einstellung eines Höhenbegrenzungssignals dient.

Die Größe und Form der Bedienungsbaueinheit 10 macht diese zu einer bequemen Handauflage während der normalen Feldarbeit und zu einem Handgriff, der der Bedienungsperson bei rauhem Gelände einen Halt gibt. Die Einfügung des Heben/Senken-Schalters 150 in die Seitenwandung des Gehäuseteils 12 gewährleistet eine einfache Einstellung unter allen Betriebsbedingungen.

Auch wenn die Erfindung lediglich anhand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Bedienungsbaueinheit, insbesondere für eine Anbaugerätelagesteuerung mit
- einem Gehäuse, welches im wesentlichen aus zwei seitlichen Gehäuseteilen (12, 14) zusammengefügt ist, die eine äußerlich konvexe Abdeckwandung bilden, welche einen sich in Längsrichtung erstreckenden Schlitz (16) aufweist,
- einem in dem Gehäuse angebrachten Begrenzungsbauteil (80), dessen äußerer Bereich in Richtung des Schlitzes (16) ausgerichtet ist und welches eine Anschlagfläche (98) enthält,
- einem in dem Gehäuse in der Nähe des Begrenzungsbauteils (80) angebrachten Steuerelement (42), dessen äußerer Bereich in Richtung des Schlitzes (16) ausgerichtet ist und an dem eine Anschlagvorrichtung (66) beweglich derart angebaut ist, daß diese wahlweise mit der Anschlagfläche (98) in Eingriff treten kann, wobei ein Eingriff den Bewegungsspielraum des Steuerelements (42) relativ zum Begrenzungsbauteil (80) begrenzt, und
- einem an das Steuerelement (42) gekoppelten Signalwandler (140), der ein der Lage des Steuerelements (42) entsprechendes Signal erzeugt.

2. Bedienungsbaueinheit nach Anspruch 1, gekennzeichnet durch Mittel (100) zur Reibungskupplung zwischen dem Steuerelement (42) und dem Begrenzungsbauteil (80), die bei einer Verstellung des Begrenzungsbauteils (80) eine entsprechende Verstellung des Steuerelements (42) bewirken.

3. Bedienungsbaueinheit nach Anspruch 1 oder 2, gekennzeichnet durch Mittel (110) zur manuellen Einstellung der Verstellung des Begrenzungsbauteils (80) relativ zum Gehäuse.

4. Bedienungsbaueinheit nach einem der Ansprüche 1 bis 3, dadurch gekennzeichnet, daß ein Vorsprung (18) von einer Seitenwandung des Schlitzes (16) derart hervorsteht, daß die Anschlagvorrichtung (66) wahlweise mit dem Vorsprung (18) in Eingriff treten kann, um die Bewegung des Steuerelements (42) zu begrenzen.

5. Bedienungsbaueinheit nach Anspruch 3 oder 4, dadurch gekennzeichnet, daß die Mittel (110) zur manuellen Einstellung der Verdrehung des Begrenzungsbauteils (80) eine an das Begrenzungsbauteil (80) angeformte Verzahnung (94) sowie eine Steuerwelle (112) umfassen, wobei die Steuerwelle (112) ein Stirnrad (136), das mit der Verzahnung (94) kämmt, und einen durch eine Bedienungsperson verdrehbaren Steuerknopf, beispielsweise ein Daumenrad (132), trägt.

6. Bedienungsbaueinheit nach Anspruch 5, dadurch gekennzeichnet, daß das Gehäuse eine sich zum Schlitz (16) hin öffnende Ausnehmung (26) aufweist, die den Steuerknopf (132) in einer Lage nahe des Begrenzungsbauteils (80) oder des Steuerelements (42) aufnimmt.

7. Bedienungsbaueinheit nach Anspruch 5 oder 6, dadurch gekennzeichnet, daß die Steuerwelle (112) mit einem ersten Ende (114) drehbar in einer Bohrung (116) in einer Seitenwandung des Gehäuses und mit dem anderen Ende drehbar und gleitbar in einem Schlitz (120) in der anderen Seitenwandung des Gehäuses so gelagert ist, daß die Steuerwelle (112) um ihr erstes Ende verkippbar ist, und eine Feder (122) zwischen dem Gehäuse und der Steuerwelle (112) angeordnet und so vorgespannt ist, daß sie den Steuerknopf (132) in lösbaren Eingriff mit der Kante der Ausnehmung (19) hält, um eine unbeabsichtigte Drehung des Steuerknopfes (132) zu verhindern.

8. Bedienungsbaueinheit nach einem der Ansprüche 1 bis 7, dadurch gekennzeichnet, daß eine Steuerwelle (112) von den Seitenwandungen des Gehäuses getragen wird und sich zwischen diesen erstreckt und daß das Steuerelement (42) und das Begrenzungsbauteil (80) je einen Schlitz (60, 92) aufweisen, durch den sich die Steuerwelle (112) erstreckt.

9. Bedienungsbaueinheit nach einem der Ansprüche 1 bis 8, dadurch gekennzeichnet, daß eine Hauptwelle (32) von den Seitenwandungen des Gehäuses getragen wird und sich zwischen diesen erstreckt, daß das Steuerelement (42) drehfest auf der Hauptwelle (32) befestigt ist und daß der Signalwandler ein Drehpotentiometer (140) enhält, dessen Welle (142) mit der Hauptwelle (32) drehfest verbunden ist.

10. Bedienungsbaueinheit nach einem der Ansprüche 1 bis 9, dadurch gekennzeichnet, daß eine Hauptwelle (32) von den Seitenwandungen des Gehäuses getragen wird und sich zwischen diesen erstreckt, daß das Begrenzungsbauteil (80) und das Steuerelement (42) auf der Hauptwelle (32) angeordnet sind und daß eine vorgespannte Feder (102) vorgesehen ist, die das Begrenzungsbauteil (80) in Richtung des Steuerelements (42) drückt.

11. Bedienungsbaueinheit nach einem der Ansprüche 1 bis 10, dadurch gekennzeichnet, daß an dem Gehäuse ein Bord (160) angeformt ist, das über ein Ende der Abdeckwandung vorsteht und Einstellelemente (164) trägt.

12. Bedienungsbaueinheit nach Anspruch 11, dadurch gekennzeichnet, daß an dem Gehäuse eine Bordabdeckung (168) zur wahlweisen Abdeckung des Bords (160) verschwenkbar angelenkt ist.

13. Bedienungsbaueinheit nach einem der Ansprüche 1 bis 12, dadurch gekennzeichnet, daß das Begrenzungsbauteil (80) eine rampenförmige Fläche (97) aufweist, die ausgehend von der äußeren Kante der Anschlagfläche (98) abfällt und in die äußere Umfangsfläche des Begrenzungsbauteils (80) übergeht, und daß die Anschlagvorrichtung (66) mit der rampenförmigen Fläche (97) derart in gleitenden Eingriff bringbar ist, daß sich das Begrenzungsbauteil (80) mit der Anschlagvorrichtung (66) in einer Richtung über die Anschlagfläche (98) hinaus bewegen läßt.

14. Bedienungsbaueinheit nach einem der Ansprüche 1 bis 13, dadurch gekennzeichnet, daß die Anschlagvorrichtung (66) einen verschwenkbar an dem Steuerelement (42) angelenkten Hebel (66) enthält.

15. Bedienungsbaueinheit nach einem der Ansprüche 1 bis 14, dadurch gekennzeichnet, daß eine Hauptwelle (32) von den Seitenwandungen des Gehäuses getragen wird und sich zwischen diesen erstreckt, daß das Steuerelement (42) wenigstens teilweise radförmig ausgebildet und drehfest auf der Hauptwelle (32) befestigt ist und daß das Begrenzungsbauteil (80) wenigstens teilweise radförmig ausgebildet und verdrehbar auf der Hauptwelle (32) gelagert ist.

## Claims

1. Operating unit, in particular for controlling the position of a mounted implement, with
- a housing which is essentially assembled from two lateral housing portions (12, 14) forming an externally convex covering wall which comprises a slot (16) extending in the longitudinal direction,
- a boundary component (80) which is mounted in the housing and of which the outer region is oriented in the direction of the slot (16) and which contains a stop face (98),
- a control element (42) which is mounted in the housing in the vicinity of the boundary component (80) and of which the outer region is oriented in the direction of the slot (16) and to which a stop device (66) is movably attached in such a way that it can become selectively engaged with the stop face (98), wherein engagement limits the clearance for movement of the control element (42) relative to the boundary component (80), and
- a signal transducer (140) which is coupled to the control element (42) and which generates a signal corresponding to the position of the control element (42).

2. Operating unit according to claim 1, characterised by means (100) for frictional coupling between the control element (42) and the boundary component (80), which in case of displacement of the boundary component (80) bring about a corresponding displacement of the control element (42).

3. Operating unit according to claim 1 or 2, characterised by means (110) for manual adjustment of the displacement of the boundary component (80) relative to the housing.

4. Operating unit according to any of claims 1 to 3, characterised in that a projection (18) protrudes from a side wall of the slot (16) in such a way that the stop device (66) can become selectively engaged with the projection (18) in order to limit movement of the control element (42).

5. Operating unit according to claim 3 or 4, characterised in that the means (110) for manual adjustment of the rotation of the boundary component (80) include a tooth system (94) formed integrally with the boundary component (80) as well as a control shaft (112), wherein the control shaft (112) carries a spur gear (136) which meshes with the tooth system (94), and a control knob rotatable by an operator, for example a cogwheel (132).

6. Operating unit according to claim 5, characterised in that the housing comprises a recess (26) which opens towards the slot (16) and which receives the control knob (132) in a position close to the boundary component (80) or control element (42).

7. Operating unit according to claim 5 or 6, characterised in that the control shaft (112) is mounted with a first end (114) rotatably in a bore (116) in a side wall of the housing and with the other end rotatably and slidably in a slot (120) in the other side wall of the housing, in such a way that the control shaft (112) can be tilted about its first end, and a spring (122) is arranged between the housing and the control shaft (112) and pretensioned in such a way that it keeps the control knob (132) releasably engaged with the edge of the recess (19) in order to prevent accidental rotation of the control knob (132).

8. Operating unit according to any of claims 1 to 7, characterised in that a control shaft (112) is carried by the side walls of the housing and extends between them and in that the control element (42) and the boundary component (80) each comprise a slot (60, 92) through which the control shaft (112) extends.

9. Operating unit according to any of claims 1 to 8, characterised in that a main shaft (32) is carried by the side walls of the housing and extends between them, in that the control element (42) is mounted non-rotatably on the main shaft (32) and in that the signal transducer contains a rotary potentiometer (140) of which the shaft (142) is non-rotatably connected to the main shaft (32).

10. Operating unit according to any of claims 1 to 9, characterised in that a main shaft (32) is carried by the side walls of the housing and extends between them, in that the boundary component (80) and the control element (42) are arranged on the main shaft (32) and in that a pretensioned spring (102) is provided, which pushes the boundary component (80) in the direction of the control element (42).

11. Operating unit according to any of claims 1 to 10, characterised in that integrally formed with the housing is a rim (160) which protrudes beyond one end of the covering wall and carries adjusting elements (164).

12. Operating unit according to claim 11, characterised in that a rim cover (168) for selectively covering the rim (160) is pivotably coupled to the housing.

13. Operating unit according to any of claims 1 to 12, characterised in that the boundary component (80) comprises a ramp-like surface (97) which slopes down from the outer edge of the stop face (98) and merges with the outer peripheral surface of the boundary component (80), and in that the stop device (66) can be brought into sliding engagement with the ramp-like surface (97) in such a way that the boundary component (80) with the stop device (66) can be moved in a direction beyond the stop face (98).

14. Operating unit according to any of claims 1 to 13, characterised in that the stop device (66) contains a lever (66) pivotably coupled to the control element (42).

15. Operating unit according to any of claims 1 to 14, characterised in that a main shaft (32) is carried by the side walls of the housing and extends between them, in that the control element (42) is at least partially of wheel-like construction and mounted non-rotatably on the main shaft (32) and in that the boundary component (80) is at least partially of wheel-like construction and mounted rotatably on the main shaft (32).

## Revendications

1. Unité de commande, notamment pour la commande de position d'outils portés, comportant
- un boîtier, qui est formé essentiellement de deux parties latérales (12,14), qui forment une paroi de recouvrement convexe en direction de l'extérieur, qui possède une fente (16) qui s'étend dans la direction longitudinale,
- un composant de limitation (80), qui est disposé dans le boîtier et dont la partie extérieure est orientée dans la direction de la fente (16) et qui contient une surface de butée (98),
- un élément de commande (42), qui est monté dans le boîtier à proximité du composant de limitation (80) et dont la partie extérieure est orientée en direction de la fente (16) et sur lequel un dispositif de butée (66) est monté de manière à être déplaçable de telle sorte que ce dispositif peut engrener au choix avec la surface de butée (98), un engrènement limitant le jeu de déplacement de l'élément de commande (42) par rapport au composant de limitation (80), et
- un transducteur de signaux (140), accouplé à l'élément de commande (42) et qui produit un signal qui correspond à la position de l'élément de commande (42).

2. Unité de commande selon la revendication 1, caractérisée par des moyens (100) d'accouplement par frottement entre l'élément de commande (42) et le composant de limitation (80), et qui, dans le cas d'un déplacement du composant de limitation (80), provoque un déplacement correspondant de l'élément de commande (42).

3. Unité de commande selon la revendication 1 ou 2, caractérisée par des moyens (110) pour régler manuellement le déplacement du composant de limitation (80) par rapport au boîtier.

4. Unité de commande selon l'une des revendications 1 à 3, caractérisée en ce qu'une partie saillante (18) fait saillie à partir d'une paroi latérale de la fente (16) de telle sorte que le dispositif de butée (66) peut engrener au choix avec la partie saillante (18) pour limiter le déplacement de l'élément de commande (42).

5. Unité de commande selon la revendication 3 ou 4, caractérisée en ce que les moyens (110) de réglage manuel de la rotation du composant de limitation (80) comprennent une denture (94), qui est formée sur le composant de limitation (80), ainsi qu'un arbre de commande (112), l'arbre de commande (112) portant un pignon droit (136), qui engrène avec la denture (94), et une tête de commande, qu'un opérateur peut faire pivoter, par exemple une roue moletée (132).

6. Unité de commande selon la revendication 5, caractérisée en ce que le boîtier comporte un évidement (26) qui s'ouvre en direction de la fente (16) et qui loge le bouton de commande (132) dans une position située à proximité du composant de limitation (80) ou de l'élément de commande (42).

7. Unité de commande selon la revendication 5 ou 6, caractérisée en ce que l'unité de commande (112) est montée par une première extrémité (114), de manière à pouvoir tourner, dans un perçage (116) aménagé dans une paroi latérale du boîtier, et par l'autre extrémité, de manière à pouvoir tourner et glisser dans une fente (120) aménagée dans l'autre paroi latérale du boîtier de sorte que l'arbre de commande (112) peut basculer autour de sa première extrémité, et qu'un ressort (122) est disposé entre le boîtier et l'arbre de commande (112) et est précontraint de telle sorte qu'il maintient le bouton de commande (132) à l'état engrené amovible avec le bord de l'évidement (19) pour empêcher une rotation intempestive du bouton de commande (132).

8. Unité de commande selon l'une des revendications 1 à 7, caractérisée en ce qu'un arbre de commande (112) est porté par les parois latérales du boîtier et s'étend entre ces dernières, et que l'élément de commande (42) et le composant de limitation (80) possèdent chacun une fente (60,92) à travers laquelle s'étend l'arbre de commande (112).

9. Unité de commande selon l'une des revendications 1 à 8, caractérisée en ce qu'un arbre principal (32) est porté par les parois latérales du boîtier et s'étend entre ces dernières, que l'élément de commande (42) est fixé avec blocage en rotation sur l'arbre principal (32) et que le transducteur de signaux contient un potentiomètre rotatif (140), dont l'arbre (142) est bloqué avec blocage en rotation à l'arbre principal (32).

10. Unité de commande selon l'une des revendications 1 à 9, caractérisé en ce qu'un arbre principal (32) est porté par les parois latérales du boîtier et s'étend entre ces dernières, que le composant de limitation (80) et l'élément de commande (42) sont montés sur l'arbre principal (32) et qu'il est prévu un ressort précontraint (102), qui repousse le composant de limitation (80) en direction de l'élément de commande (42).

11. Unité de commande selon l'une des revendications 1 à 10, caractérisée en ce que sur le boîtier est formé un bord (160), qui fait saillie au-delà d'une extrémité de la paroi de recouvrement et porte des éléments de réglage (164).

12. Unité de commande selon la revendication 11, caractérisé en ce que sur le boîtier est articulé un revêtement de bord (168) pouvant basculer de manière à recouvrir à volonté le bord (160).

13. Unité de commande selon l'une des revendications 1 à 12, caractérisée en ce que le composant de limitation (80) possède une surface en forme de rampe (97), qui descend à partir du bord extérieur de la surface de butée (98) et se prolonge par la surface circonférentielle extérieure du composant de limitation (80), et que le dispositif de butée (66) peut être amené à engrener avec glissement avec la surface en forme de rampe (97) de telle sorte que le composant de limitation (80) peut se déplacer avec le dispositif de butée (66) dans une direction, au-delà de la surface de butée (98).

14. Unité de commande selon l'une des revendications 1 à 13, caractérisée en ce que le dispositif de butée (66) contient un levier (66) articulé de manière à pouvoir basculer sur l'élément de commande (42).

15. Unité de commande selon l'une des revendications 1 à 14, caractérisée en ce qu'un arbre principal (32) est porté par les parois latérales du boîtier et s'étend entre ces dernières, que l'élément de commande (42) est réalisé au moins partiellement sous forme de roue et est fixé avec blocage en rotation sur l'arbre principal (32) et que le composant de limitation (80) est agencé au moins en partie en forme de roue et est monté de manière à pouvoir tourner sur l'arbre principal (32).
